# EUROPEAN PATENT SPECIFICATION

(11) **EP 3 347 886 B1**
(45) Date of publication and mention of the grant of the patent: **04.11.2020**
(21) Application number: 15771868.5
(22) Date of filing: 09.09.2015
(51) Int. Cl.: G08G 1/01, H04Q 9/00

(54) **METHODS AND DEVICES FOR REQUESTING AND PROVIDING INFORMATION**
VERFAHREN UND VORRICHTUNGEN ZUR ANFRAGE UND BEREITSTELLUNG VON INFORMATIONEN
PROCÉDÉS ET DISPOSITIFS POUR DEMANDER ET FOURNIR DES INFORMATIONS

(43) Date of publication of application: 18.07.2018
(73) Proprietor: Telefonaktiebolaget LM Ericsson (publ), 164 83 Stockholm (SE)
(72) Inventor: SELL, Frank, NL-6291 LR Vaals (NL); FEDERLIN, Alexander, 41352 Korschenbroich (DE); LAUTERBACH, Tim, 6466 CR Kerkrade (NL); FAGERHOLT, Carl, Anders, S-431 50 Mölndal (SE)
(74) Representative: Brann AB
(86) International application number: PCT/EP2015/070583
(87) International publication number: WO 2017/041838

(56) References cited:
- DE-A1-102013 200 899
- US-A1- 2008 281 960
- US-A1- 2013 325 940

## Description

### Technical field

Various embodiments relate to methods, devices, computer program products and a system for requesting and providing information from clients located in an area.

### Background

Today magnetic loops and cameras / video surveillance (often utilizing number plate recognition) are used to monitor vehicles and measure their speed in order to collect traffic related information and estimate traffic flow and density. Traffic management centrals operators may also buy so called floating car data (FCD, comprising for example position and speed related data) as raw or aggregated data from companies in the navigation device business (for example companies selling traffic navigation devices for cars which are connected to a central server which collets for example FCD related data from the devices).

The Cooperative Intelligent Traffic Systems (C-ITSs) are standardized in EU and US (ETSI/IEEE) with the purpose of sharing information for better traffic safety and efficiency. The primary standardized access technology for C-ITS is ITS G5 or in the US IEEE 802.11p ad hoc WLAN on 5.9 GHz for vehicle to vehicle (V2V) or vehicle to infrastructure (V2I) communication. Examples of messages that are broadcasted in a limited range (limited mainly by the ad hoc WLAN range) are Decentralized Environmental Notification Message (DENM = an event has happened, for example slippery road ahead) and Cooperative Awareness Message (CAM = here I am, here I'm going) which are repeated in a defined frequency, for example with 1-10 Hz.

Road Site ITS Stations (also called Road Site Units, RSUs) owned by the road operator are planned to take care of the communication between vehicles and TMC by mostly standardized messages. Road operators will place those RSUs along (major) roads to collect information and send messages (for example CAM and DENM messages) to and from passing vehicles. However it will take some time and is costly to build RSU's for a bigger road network. Often the RSUs are fixed installations, but RSUs can be also mounted on a road work warning trailer (semi fixed).

The collected information is sent from the RSUs to the Traffic Management Center (TMC) back end for example to enable monitoring of the traffic flow.

Traffic management centers (TMC) should become more efficient and operate in real-time, or almost real-time, in order to improve traffic management and offer better and more accurate services to their customers. Therefore TMCs need to be able to collect traffic information (for example FCD which may comprise CAM and DENM messages) in a flexible, efficient and dynamic way, preferably in real-time or almost real time and anywhere in the road network.

However with the above described system of using RSUs to collect FCD data or of buying FCD, this can be only achieved to a limited extent due to the described problems above (RSUs installations along the majority of the roads takes a long time and is expensive, buying of FCD is expensive and only limited FCD data may be available and FCD data may be not available in real-time).

Further by frequently provided information (for example FCD) from vehicles in the network, a lot of data traffic is generated in the underlying network by providing and collecting information which may be not used by the TMC to the full extent or is even not needed by the TMC. The TMC is often only interested in a sub-set of the collected information.

US 2013/0325940 A1 discloses a geomessaging server and a geomessaging client for use in a cooperative intelligent transportation system. The server sends an event notification message, via an infrastructure-based wireless communication network, to a geomessaging client associated with a vehicle that is located within a targeted one of multiple defined geographical areas. This message indicates the occurrence of an event pertinent to travel conditions in the targeted area. The server also generates a message relay request that solicits the geomessaging client to relay the message to any other vehicles within the vehicle's vicinity via a vehicular ad-hoc wireless communication network. The sever then sends the generated request to the client via the infrastructure-based network. In at least some embodiments, the geomessaging client relays the message accordingly responsive to receiving the request.

US 2008/0281960 A1 discloses a method and a computer system for monitoring traffic, the computer system comprising an information handling server arranged to receive through a communications network location data transmitted from at least a first and a second reporting means in at least a first and a second vehicle, respectively, at least a first database for storing said location data, an analysis server arranged to retrieve said location data from the first database, analyze said location data and store data regarding the result of the analysis and/or present the result of the analysis to an operator and/or a monitoring function. The information handling server and the client preferably support the Session Initiation Protocol, SIP.

### Summary

Therefore a need exists to query and receive information (for example CAM and DENM messages or any other client related information) from a number of clients (for example vehicles/sensors) distributed over a certain geographic area in a dynamic, flexible and efficient way.

This need is met by the features of the independent claims. The dependent claims define refinements and embodiments.

According to an aspect a method for a first network entity requesting information from clients located in a first area is provided, the method comprising determining a second area overlapping with the first area and transmitting an information request to clients located in the second area, wherein said information request comprises a condition defining when a client shall respond to the information request.

According to a further aspect a method for a client providing information requested by a first network entity is disclosed, the method comprises receiving an information request from the first network entity, wherein said information request comprising a condition defining when to respond to the information request. The method further comprises determining if the condition is met, providing the requested information and transmitting the requested information when the condition is met.

According to a further aspect a first network entity configured to request information from clients located in a first area is provided, the first network entity comprising at least one processing unit configured to determine a second area overlapping with the first area, and an interface configured to transmit an information request to clients located in the second area, wherein said information request comprises a condition defining when a client shall respond to the information request.

According to a further aspect a client configured to provide information requested by a first network entity is provided, the client comprising an interface configured to receive an information request from the first network entity, wherein said information request comprises a condition defining when to respond to the information request. The interface is further configured to transmit the requested information when a condition is met. The client further comprises at least one processing unit configured to provide the requested information and to determine if the condition is met.

According to a further aspect, a computer program for a first network entity requesting information from clients located in a first area is provided, the computer program comprising instructions which, when executed on at least one processor, cause the at least one processor to determine a second area overlapping with the first area, and to transmit an information request to clients located in the second area, wherein said information request comprises a condition defining when a client shall respond to the information request.

According to a further aspect, a computer program for providing information requested by a first network entity is disclosed, the computer program comprising instructions which, when executed on at least one processor, cause the at least one processor to receive an information request from the first network entity, wherein said information request comprising a condition defining when to respond to the information request, to determine if the condition is met, to provide the requested information, and to transmit the requested information when the condition is met.

According to a further aspect, a network entity for requesting information from clients located in a first area is provided, the first network entity comprising means for determining a second area overlapping with the first area, and a means for transmitting an information request to clients located in the second area, wherein said information request comprises a condition defining when a client shall respond to the information request.

According to a further aspect, a client for providing information requested by a first network entity is provided, the client comprising a means for receiving an information request from the first network entity, wherein said information request comprises a condition defining when to respond to the information request, a means for determining if the condition is met, a means for providing the requested information and a means for transmitting the requested information when the condition is met.

According to a further aspect, a system for providing requested information from clients located in a first area is disclosed, the system comprising a network entity and at least one client according to the aspects mentioned above.

According to a further aspect, a method for providing requested information from clients located in a first area is disclosed, the method comprising determining a second area overlapping with the first area, transmitting an information request to clients located in the second area, wherein said information request comprises a condition defining when a client shall respond to the information request. The method further comprising receiving the information request, determining if the condition is met, providing the requested information, and transmitting the requested information when the condition is met.

Under the above aspects a service provider (for example an operator of a TMC) is enabled to request and collect information (for example FCD data) from clients (for example vehicles or sensors) in a selective and efficient way and in real-time or close to real-time, while limiting the traffic in the underlying telecommunication network to a minimum and increasing the quality of the collected information by avoiding to contact not affected clients and by avoiding to receive not requested information from contacted clients.

In summary a service provider is enabled to provide a better and more accurate service to customers, while optimizing the utilization of the underlying communication network resources.

At least one or more of the following advantages are provided:
- Reducing the underlying network traffic by requesting information/data only from clients in a selected spatial area and by instructing the clients to provide the requested information only if a condition is met.
- Increasing received information/data quality by receiving only the requested information meeting the condition, optionally in an already aggregated format.
- Receiving the requested information in-real time or close to real-time.
- Requesting the information/data in any parts of the network independent from the availability of an underlying RSU infrastructure.

It is to be understood that the features mentioned above, and the features yet to be explained below, can be used not only in the respective combinations indicated, but also in other combinations or in isolation, without departing from the scope of the present invention. Features of the above-mentioned aspects and embodiments may be combined with each other in other embodiments.

### Brief Description of the Drawings

The foregoing and additional features and effects of the invention will become apparent from the following detailed description when read in conjunction with the accompanying drawings showing example embodiments. The elements and steps shown in the figure are illustrating various embodiments and show also optional elements and steps.
FIG. 1 shows an example embodiment of a system comprising vehicles, a service provider and a geographic receiver and a geographic enabler.
FIG. 2 illustrates an example of a geo messaging grid and how to map an area to the grid.
FIG. 3A shows an example of a system comprising network entities and clients.
FIG. 3B shows a further example embodiment of a system comprising network entities and clients.
FIG. 3C shows a further example embodiment of a system comprising network entities and clients.
FIG. 3D shows a further example embodiment of a system comprising network entities and clients.
FIG. 4A illustrates an example comprising vehicles on a street section.
FIG. 4B illustrates an example embodiment of the vehicles and the street section of Fig. 4A.
FIG. 5 shows an example embodiment of a message flow between a service provider, a network entity and a client.
FIG. 6 shows an example of an embodiment of a method for a network entity.
FIG. 7 illustrates an example of an embodiment of a method for a client.
FIG. 8 shows an example embodiment of a client.
FIG. 9 shows an example embodiment of a network entity.
FIG. 10 shows another example embodiment of a client or a network entity.
FIG. 11 illustrates an example embodiment of a system comprising of one service provider, a network entity and a clients.
FIG. 12 illustrates an example embodiment of a method for a system.

### Detailed Description of Embodiments

In the following description, for purposes of explanation and not limitation, specific details are set forth, such as particular network environments and communication standards etc., in order to provide a thorough understanding of the invention. It will be apparent to one skilled in the art that the invention may be practiced in other embodiments that depart from these specific details. For example, the skilled person in the art will appreciate that the current invention may be practised with any wireless network like for example UMTS, GSM, LTE or 5G (supporting for example machine-to-machine type communication) networks. As another example, the invention may also be implemented in short-range wireless networks such as WLAN, Bluetooth or WiFi systems or in wireline networks, for example in any IP-based network.

Embodiments will be described in detail with reference to the accompanying drawings. The scope of the invention is not intended to be limited by the embodiments described hereinafter or by the drawings, which are taken to be illustrative only. Elements or steps shown in the drawings may be optional and/or their order may be exchangeable.

The drawings are to be regarded as being example schematic representations, flow diagrams and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

In the following description detailed example embodiments are described with respect to traffic related services / traffic management where a client is typically a vehicle. However this shall be not interpreted as limiting. The described methods and entities/clients can be used in any scenario where information from geographical distributed clients is requested and collected. Traffic management is just one example service and a vehicle (for example a car) is just one example for a client.

A network entity may be a server, especially an application server for Geo Location Messaging (GLM), a traffic control server, an element of a mobile core network, an element of a mobile access network or any kind of network element performing the described functionality. The network entity may be integrated into another network element or may be a stand-alone network entity. The network entity may be implemented in a cloud. The network entity may have a connection to one or more service providers and to clients.

A service provider may provide any kind of service for clients or any other interested party. A service provider may be a road operator (for example a national/city/private motorway), a traffic authority (for example city, state or federal), a traffic management center, a map provider or a traffic service provider. Examples of the services provided by the service provider are traffic management, real time traffic information, multi modal traffic information, navigation services, assistance to emergency vehicles or assistance vehicles.

A client may be for example a portable client (for example a mobile device, a tablet, a laptop) or a vehicle (for example a car, a plane, a drone, a motorcycle). The portable client may be part of the vehicle (for example temporary or fixed installed in the vehicle) and may function there as the client of the vehicle. A client may be a GLM client or a sensor and may support machine-to-machine type functionality. Further the client may be movable or fixed installed.

The client may be connected wireless to a communication network. The connection of the client may be a mobile network connection (for example GSM, UMTS, LTE, 5G) or any other kind of connection (WLAN/WiFi, Bluetooth, Wimax, Near field communication (NFC) ...). The client may establish the connection directly to the network or via other clients which provide the connection to the network. The client itself may route connection of other clients towards the communication network or further clients.

A condition (or a criterion) can comprise of one or more parameters. If the one or more parameter fulfil defined requirements (for example if the one or more parameter is speed and if a defined speed is exceeded) the condition is supposed to be met. If a condition comprises of more than one parameter the condition may be met if the requirements of all parameters are fulfilled or if a subset of the requirements of the parameters is fulfilled. The one or more parameter may be parameters of a client or which are collected by a client. The one or more parameter may relate to properties of the client, to environmental parameters, to properties of other clients or to time (for example if the client is a vehicle parameters may be speed, driving direction, ambient temperature, status of rain sensor/wipers, type of the vehicle, speed of clients in an area around the client, area where the client shall be located, point a client shall pass, time point or time interval).

The requested information may be any kind of information or data, for example measurement results, client related data (for example position, speed, direction, type of the client/vehicle), identifications, data from sensors, history data, environmental data, data collected from other clients or sensors, status data or calculated data.

With the roll out of C-ITS G5 vehicles will be able to send CAM and DENM messages. Instead (or in addition) to an ad hoc WLAN for communicating CAM and DENM messages towards the TMC, it is proposed to use other networks technologies (for example mobile networks) to transport the CAM/DENM messages (or any other information/data reported by a vehicle or client). Further a publish/subscribe system is proposed which allows service providers (e.g. TMCs / Traffic Authorities) to subscribe for events which have a geographical relevance, without having to deal with the complexity which is involved when dealing with a large client base, many events and geographical computations. It is proposed that the TMC can place FCD measurement (or any other kind of measurements as needed in almost real time in a selected geographical area.

By for example instructing vehicles to upload a certain amount of CAM messages (or other measurement messages) per time interval, traffic speed at a specific point can be measured. By changing the area in which a measurement is required, traffic management can place measurement points where they are needed in real time.

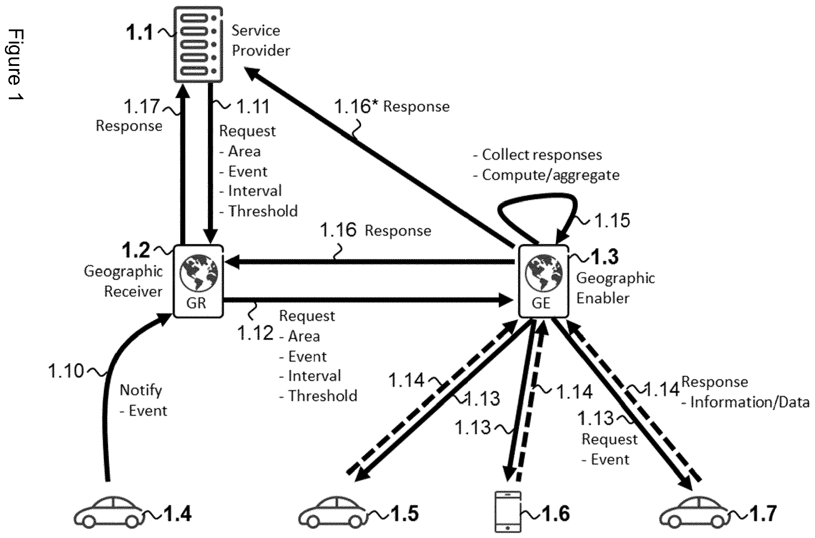

Figure 1 shows one example embodiment related to a service provided by a service provider (SP) 1.1. The service may be for example a traffic monitoring and warning service for vehicles (for example cars 1.4, 1.5 and 1.7). For the purpose of traffic monitoring vehicles and/or sensors 1.6 can be located for example at or along a road.

The Service Provider 1.1 (for example a Traffic Authority /TMC) can define measurement tasks targeted to sensors or vehicles which are located within a certain geographic area. In a measurement task a number of parameters can be specified like for example:
- The type of event / measurement / information the service provider is interested in.
- The duration (interval) for which the measurement should take place.
- A threshold if binary yes/no response is expected in case the resulting measurement average is above/below a certain threshold.

The SP 1.1 sends a request 1.11 related to the measurement task to a Geographic Receiver (GR) 1.2 which is an apparatus to keep track on those requests. The GR forwards 1.12 the request to a Geographic Enabler (GE) 1.3 which holds information about different sensors and devices (for example vehicles) and their location in the area where the request from the SP is targeted to. There could be several GEs (not shown) responsible for different geographical areas. Those areas may be overlapping. If there are several GEs, the GR can select the GE which can handle the request. The GR may select several GEs (and so forward the request to several GEs) if the target area of the SP falls into the responsible areas of several GEs. The forwarded request may be modified (for example by adapting parameters of the request and/or by adding information) by the GR before it is forwarded from the GR to the one or more GEs. However the request can be also forwarded unchanged.

The GE 1.3 will send request messages 1.13 to clients in the targeted geographic area (for example to sensor platforms 1.6 or vehicles 1.5 and 1.7 in the targeted geographic area), and instruct them to perform the required measurements or collect/compute the required information/data and to send the result back 1.14. The instructions in the request message 1.13 may comprise a duration for the measurement. The GE collects the result from the individual sensor platforms (for example CAMs), optionally aggregates and/or analyses/processes them 1.15, and sends a response 1.16 back to the GR 1.2. The GR may further process or aggregate the information in the response before forwarding 1.17 it to the SP 1.1. Alternatively the GE may send the response directly to the SP and so bypassing the GR (1.16*).

The GR 1.2 may also receive information from unsolicited Event Notifications 1.10 originating for example from vehicles 1.4 or sensors (not shown, for example sensors along roads). Those unsolicited Event Notifications 1.10 could be for example DENMs uploaded by IVSs or CAMs and DENMs collected by IRSs. Unsolicited Event Notifications may be generated in a periodic manner and may be also received by the GE 1.3 (not shown).

The information may be transmitted by using standard CAMs with for example different parameter set. The CAM itself may be anonymized or may be authenticated by a public key system, so when it is for example broadcasted over a 5.9 GHz WLAN the speed information cannot be used for law enforcement. When the CAM is sent over a mobile network the identity of the SIM card is known so there should be a layered structure to ensure privacy of the client/vehicle.

There may be many parameters in the CAM, the most relevant for floating car data are:
- Vehicle position
- Vehicle heading
- Speed
- Vehicle length and width (Truck/Trailer or car - different speed limits)
- Vehicle type
- Emergency vehicle - lights and sirens on / off
- Ambient air temperature
- External lights (=fog lights on / off)
- Wiper systems (= indication of heavy rain)

The above list is non-exhaustive, the CAM may comprise additional parameters as well.

Figure 1 shows the GR 1.2 and the one or more GEs 1.3 as separate network entity. In a specific embodiment the GR and one or more of the GEs may be combined in one (logical or physical) network entity. Further the functionality of the GR and GE may be also implemented in a cloud network.

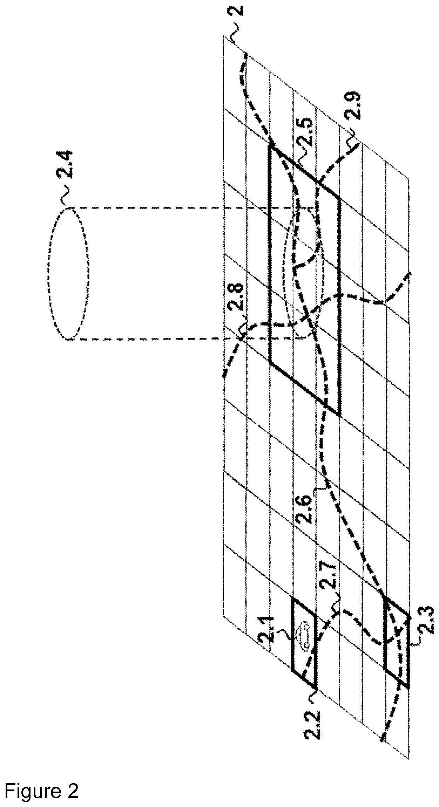

As explained above the GE 1.3 holds information about different sensors and devices (for example vehicles) and their location in an area where the GE is responsible for. Figure 2 shows an area 2 where for example the GE 1.3 of Figure 1 is responsible for. The area 2 is divided into tiles (for example tiles 2.2, 2.3). Tiles can have any size or shape (for simplicity reasons they are shown in square form in Figure 2). Also 3 dimensional "tiles" are possible. When a client (for example vehicle 2.1) attaches (for example to the mobile network) it reports its position (for example GPS coordinates) to the GE 1.3 and gets the coordinates of the tile where it is located from the GE (for example the border coordinates of tile 2.2 for vehicle 2.1). Thus the GE has the knowledge where the vehicle is located, and the vehicle can detect when it leaves a tile.

When the vehicle reaches a tile border it contacts the GE server and gets the coordinates of the new tile it is moving in. The GE updates its database with the information that the vehicle is now located in the new tile. Thus the GE has an overview about the vehicles in his responsible area 2 and in which tile they are located. With this concept traffic inside the underlying communication network (for example a mobile communication network) connecting the vehicles and the GE is optimized, since vehicles only report a tile change and do not need to send periodic updates of their location (which will load the underlying communication network). The GE itself has the knowledge about the vehicles in a certain tile or sub-set of tile, and can send messages targeted to this area only to vehicles located in the tile or the sub-set of tiles, and so minimize the traffic in the underlying telecommunication network by not addressing all vehicles in the area 2 where the GE is responsible for.

In figure 2 an example road network (comprising roads 2.6 to 2.9) in area 2 is shown. If a service provider operating for example a TMC and is interest in traffic related information in area 2.4, the SP will send a request for the traffic related information he is interested in area 2.4 to the GR 1.2 of figure 1. The GR will pass (unmodified or modified) the request to GE 1.3 responsible for area 2. The GE will map area 2.4 to the tiles overlapping with this area (tiles inside the sub-area 2.5 in figure 2) and requests the traffic related information from vehicles located in sub-area 2.5.

Instead of an area 2.4 the SP may also request traffic related information of a specific location (for example the crossing of roads 2.6 and 2.7). The GE will then map the specific location to one or more belonging tiles (for example tile 2.3 in case of the crossing between roads 2.6 and 2.7).

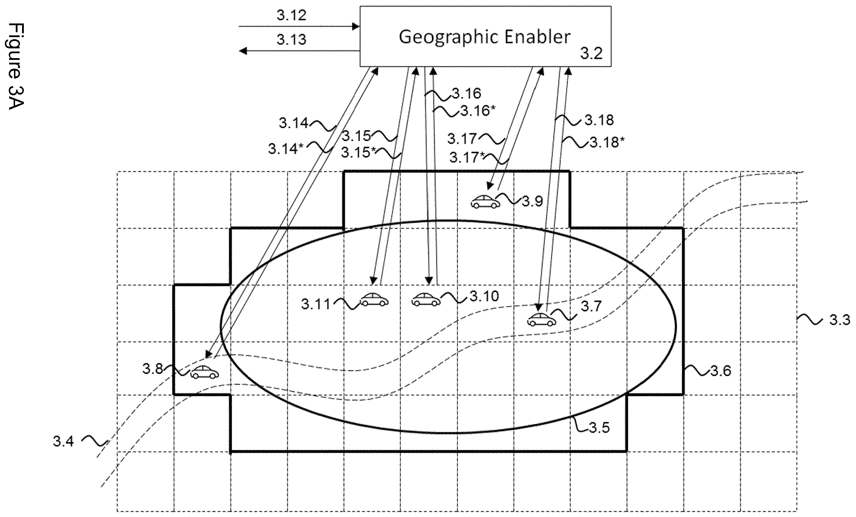

Figure 3A shows the functionality of the GE in more detail. GE 3.2 is in charge of area 3.3 comprising a highway 3.4 and several smaller streets (not shown). Vehicles 3.8 and 3.7 travel on the highway 3.4, while vehicles 3.9 to 3.11 travel on smaller streets in area 3.3. GE 3.2 knows the tiles in which vehicles 3.7 to 3.11 are located. The GE 3.2 receives a request 3.12 for traffic related information in area 3.5. The GE 3.2 maps area 3.5 to the tiles overlapping with this area (tiles inside the sub-area 3.6). In a next step the GE will send requests (3.14 to 3.18) for the traffic related information to all vehicles (3.7 to 3.11) located inside the area 3.6, collect the responses (3.14* to 3.18*) of the vehicles and send them back (optionally aggregated and/or processed) in step 3.13.

The above described method to request and provide information offers the advantage that the information can be collected in (almost) real time, that the request can be limited to a geographical area 3.6 and that the information can be collected independent from the availability of RSU in the area of interest. This has the effect that the underlying communication network load is reduced and that only the requested information can be collected.

However there are vehicles (3.8, 3.9) in area 3.6 which will be reached and which will respond that are outside the area 3.5. The SP may be not interested in the reported information of vehicles 3.8 and 3.9, since it was not requested. Due to the mapping of area 3.5 to tiles 3.6, a bigger area is selected by the GE (area 3.6 is bigger than area 3.5). Therefore the GE will send requests also to vehicles located in area 3.6 which are not located in area 3.5. Those vehicles (3.8, 3.9) will then also respond to the request (3.14, 3.17) and will provide (3.14*, 3.17*) the requested information. Thus additional load on the underlying communication network is generated by sending requests and getting responses to/from vehicles which are located inside area 3.6 but outside area 3.5 and are therefore not targeted by the request 3.12. Further the information quality of the collected responses is not optimum since the collected responses comprise responses of vehicles 3.8 and 3.9 inside area 3.6 but outside of area 3.5.

To overcome those disadvantages it is proposed that the requests 3.14 to 3.18, which are send by the GE 3.2 to the vehicles 3.7 to 3.11, comprise a condition defining when a vehicle shall respond.

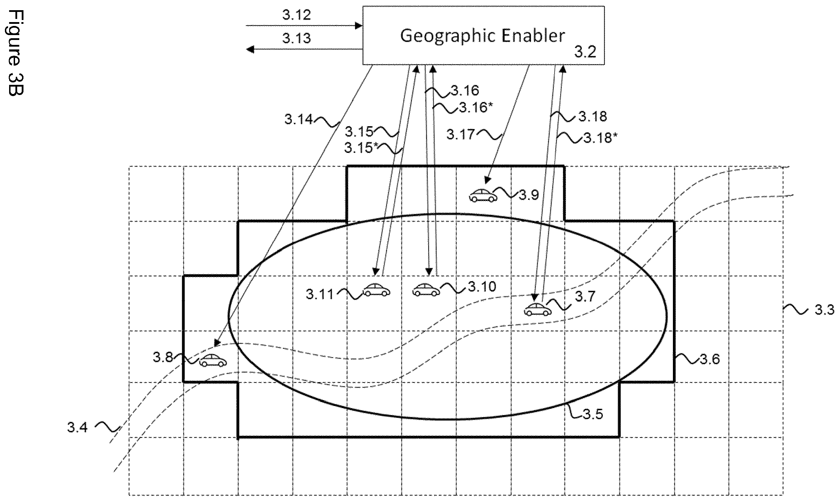

Figures 3B shows the same example scenario as Figure 3A and the same description as for Figure 3A applies also to Figure 3B, with the exception that requests 3.14 to 3.18 comprise a condition defining when a vehicle shall respond. In the shown example the condition is that the vehicles must be in the area 3.5. Vehicles 3.7 to 3.9 process the received request 3.14 to 3.18, compare the condition to be in the area 3.5 with their current position, and decide to respond to the request only when the condition is fulfilled. Vehicles 3.8 and 3.9 in Figure 3B detect that they are not in area 3.5 and therefore they do not respond to the request.

As shown in Figure 3B only the vehicles in area 3.5 respond and only responses 3.15*, 3.16* and 3.18* are provided back to GE 3.2. Not wanted responses (for example 3.14* and 3.17* shown in Figure 3A) of vehicles outside area 3.5 are omitted. In addition to the advantages mentioned in connection with Figure 3A, load of the underlying communication network is reduced further and the information quality is increased (only wanted responses 3.15*, 3.16* and 3.18* are provided).

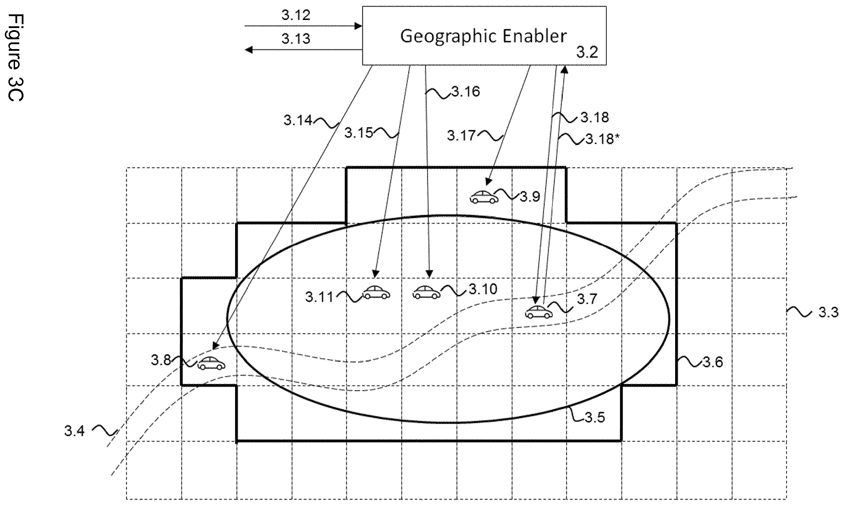

Figure 3C shows another example in line with Figure 3B, however a different condition is send in requests 3.14 to 3.18 to the vehicles in area 3.6. The condition used in Figure 3C is, that only information from vehicles driving on Highway 3.4 in area 3.5 is requested. As described above the GE 3.2 adds the condition to the requests 3.14 to 3.18 send to vehicles 3.7 to 3.11. Since only vehicle 3.7 is inside area 3.5 and travels on highway 3.4, only vehicle 3.7 will respond (3.18*) to the request. Thus load of the underlying communication network is even reduced more and data quality is further increased compared to Figure 3B.

However the situation shown in Figure 3C is still not optimum since requests are send to all vehicles in area 3.6, even if the highway 3.4 forms only a small subset of the area 3.6. Thus the situation could be improved even further.

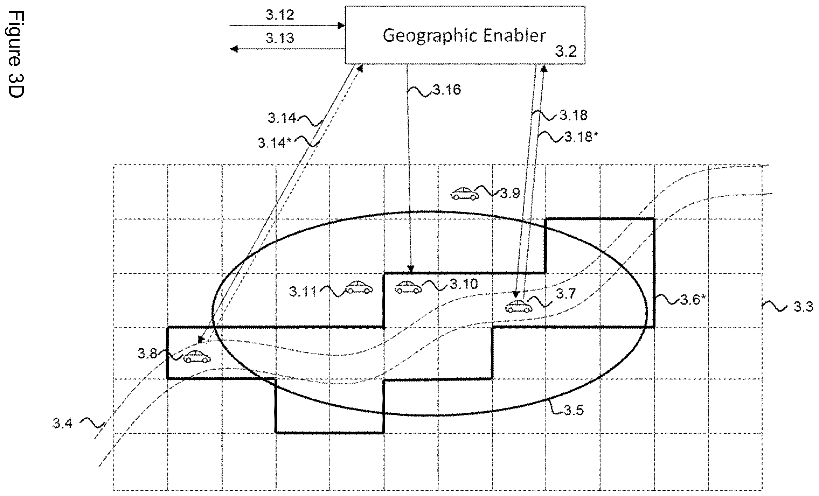

Figure 3D shows the basic scenario of Figures 3A to 3C, however GE 3.2 of Figure 3D selects the tiles overlapping with the area 3.5 by taking an additional condition into account (only tiles shall be selected which comprise a part of highway 3.4). By applying this condition (tile must overlap with area 3.5 and with highway 3.4) tiles in sub-area 3.6*, as shown in Figure 3D, are selected by the GE 3.2. As consequence GE 3.2 will send the requests only to vehicles located in area 3.6* (requests 3.14, 3.16 and 3.18 targeted to vehicles 3.7 and 3.8 and 3.10). As is can be seen no request is send to vehicle 3.11 which is located inside area 3.5 but outside area 3.6*. Thus less underlying communication resources for sending requests from GE 3.2 to the vehicles are needed. Further vehicle 3.11 is not loaded with a request which is not targeted for it.

As shown in Figure 3D only requests 3.14, 3.16 and 3.18 are send to vehicles 3.7, 3.8 and 3.10 located in area 3.6*. If the condition included in the requests is that the vehicle shall travel on highway 3.4, then only vehicles 3.7 and 3.8 will respond (3.14*, 3.18*). If the condition further comprises that the vehicle shall be inside area 3.5, then only vehicle 3.7 will respond (3.18*).

With respect to Figures 3A to 3D, vehicles (3.7 to 3.11) which are responding to request (3.14 to 3.18) of the GE 3.2 may instead of responding to the GE 3.2 (as shown in Figures 3A to 3D) respond directly to the service provider or the entity that has issued the request 3.12 and so bypass the GE 3.2 (this is not shown in figures 3A to 3D).

Requests 3.14 to 3.18 of figures 3A to 3D may be send as broadcast, multicast or unicast requests.

The condition defining when a vehicle shall respond may be received together with the request 3.12 at the GE 3.2, or the condition may be generated or modified by the GE 3.2. For example request 3.12 may ask for information about vehicles driving on highways in area 3.5 with a speed below 50 km/h. GE 3.2 is aware about the highways in the area 3.3 and translates the general "on highways" in request 3.12 to the highways in the area 3.3 (in the present example this will be only highway 3.4). Requests 3.14 to 3.18 transmitted by the GE 3.2 to the vehicles 3.7 to 3.11 in area 3.6 comprise then the condition that the vehicles shall only respond if they are on highway 3.4 and drive below 50km/h. The condition "on highway 3.4" may be added to the requests 3.14 to 3.18 by giving the highway name (where the vehicle then knows due its navigation system if it is on the highway or not) or by giving the highway coordinates.

The above described speed and area parameters, which are used by the condition for defining when a vehicle shall respond, are non-limiting examples. Any kind or combination of parameter(s) related to a vehicle or any other kind of client could be used instead.

Further parameters that could be used by the condition in the context of vehicles are for example:
- Vehicle position
- Vehicle heading
- Speed
- Driving direction
- Vehicle length and width (Truck/Trailer or car - different speed limits)
- Vehicle type
- Emergency vehicle - lights and sirens on / off
- Ambient air temperature
- External lights (=fog lights on / off)
- Wiper systems (= indication of heavy rain)
- Travelled distance

The above list is non-exhaustive and focuses on parameters for vehicles as clients. For other clients (for example any kind of sensors) different parameters may apply, for example depending on what the sensor measures and where the sensor is located. In addition to those parameters the condition may also comprise a time, time interval or a frequency requirement defining a time or time point during/at which the information is requested.

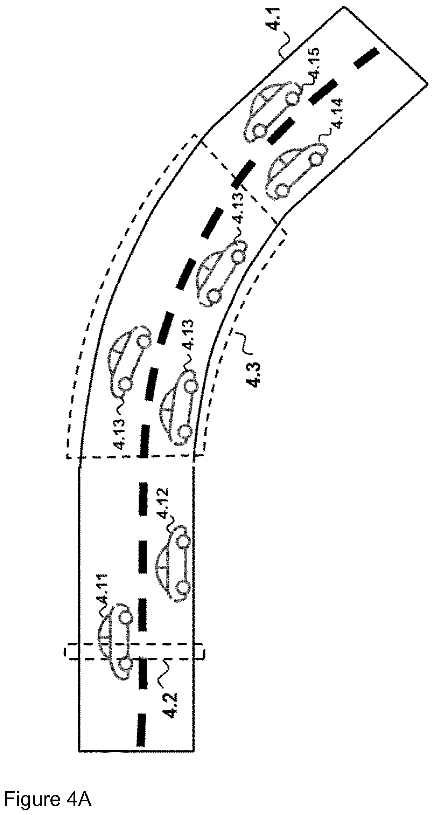

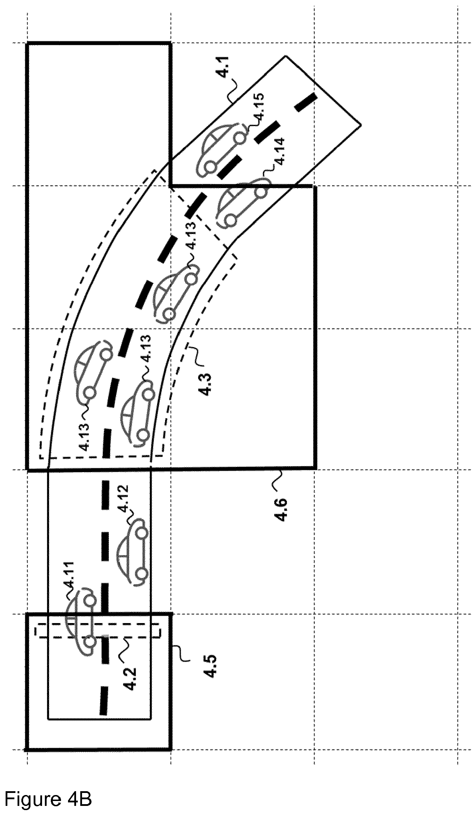

Figures 4A and 4B show an example of how point or route measurements for vehicles can be done utilizing the principles as outlined above. Figure 4A shows a part of a road 4.1 where vehicles 4.11 to 4.15 are travelling on.
- Point measurement:
   For example at a selected point 4.2 (such a point may be placed at a cross section of a road) speed (and other information/data) of a vehicle shall be measured in one or both directions for vehicles of different classes. Information/data should be transferred to the SP at a selected time interval or after a selected number of passed vehicles.
   The GE receives the measurement request comprising information about the above given condition. The GE maps the selected point 4.2 to tile 4.5 and sends a measurement request to all vehicles located in tile 4.5 (here vehicle 4.11). The request send by the GE to vehicle 4.11 will comprise as condition defining when to respond to the request spatial information of point 4.2. Further the condition may comprise the time interval and the driving direction. Further the request may comprise details about the requested information (for example speed, direction, vehicle class). If vehicle 4.11 passes point 4.2 (and fulfils also the other possible conditions like the time interval and the driving direction) it will gather the requested information and send a response to the GE.
   The GE may aggregate the received information (for example over time or until a certain amount of vehicles have responded) and send then the aggregated information to the SP.
- Route measurement:
   Similar to travel time measurement by number plate recognition, two or more points (or cross sections of a road) can be defined and in addition the travel time of an individual vehicle between the points can be calculated.
   For example if a SP is interested in travel time of vehicles through section 4.3 of the road 4.1, it will request the GE to provide the travel time information in area 4.3. The GE will map section 4.3 to the tiles 4.6 and will send a request to all vehicles (4.13) in area 4.6. The request defines as condition when to respond, for example the entry or exit points of area 4.3, or when a vehicle has passed through 4.3. Accordingly vehicles entering/exiting area 4.3, or which have passed through area 4.3, will send a response to the GE. In the earlier case (entry/exit) vehicles will indicate if they enter or exit the area and provide a time stamp. The GE can then, after receiving the exit response, calculate the actual travel time of the vehicle. In the later case (vehicle passed through area 4.3) the vehicle may itself calculate the travel time through the area and report it to the GE when it exits area 4.3. The GE may then aggregate the travel time from several vehicles through area 4.3 and send a response to the SP.
- All vehicles in an area (not shown)
   If a SP is interested in certain measurements across a whole area (e.g. speed, or the status of windshield wipers and headlights to pinpoint heavy storm conditions), all vehicles in the area can be instructed to deliver measurement information, for example in a certain periodicity or when a status change occurs (for example windshield wipers and headlights/fog lights are switched on/off). As each measurement may comprise location information, the SP can visualize the measurement information for example on a map.

Some advantages of the method as described in connection with Figures 3B to 3D and 4A to 4B are:
1. Improving of data quality
   A SP can specifically define parameters of interest for his measurement campaign. The GE system is able to distribute the measurement request to clients which are known to be in the proximity of the desired relevance area. Sending the relevance area or another condition as part of the measurement request enables clients to check if they meet the condition for the measurement request. Clients who do not meet the condition will ignore the measurement request and will thus not dilute the measurement campaign with their data.
2. Reduction of transmission resources
   The GE system uses a tile-based mechanism. Instead of the actual position, the subscribers are selected by the tile where they are currently located in. This mechanism allows a pre-selection of clients and will save transmission resources. By piggy-backing the relevance area (or another condition defining when to respond) to a request send to a client not only data quality is improved, but also the usage of transmission resources is optimized since they are only used by clients that meet the condition.
   The GLM system will store information about which client received which measurement request, thus avoiding the need to retransmit redundant measurement requests. A "sticky" measurement campaign can be realized, without the Service Provider needing to constantly retransmit the measurement request to a certain client group.

One example of a service provided by a SP utilizing the above described mechanisms is a traffic density service, which provides information on traffic density and vehicle speed for selected areas. The authority which owns the GE provides access to the vehicle information/data for the specified area, which can be tailored and shaped according to the service needs. It is proposed that information which can be accessed by the service provider should not contain individual location or identity information/data, but instead anonymized information/data from devices which fulfil the given condition. Since the GE acts as a broker for all information/data from relevant sensors and devices it is possible to combine requests on device information/data (e.g. for different services or different service providers) and thus reduce the number of communication transactions per sensor or device/client even further.

By using the tile-based concept, the GE can distribute the requests to vehicles in the tiles which are overlapping with the relevance area. The targeted relevance area may be forwarded to the vehicles possibly together with some other condition. A local filtering process can take place by vehicles in the targeted tiles to check, if the vehicle is in the targeted relevance area and/or fulfils the other condition. Only if the vehicle is actually within the relevance area and/or fulfils the other condition, it will answer to the request and provide the requested information (for example perform the requested measurement strategy).

The requested information from the vehicles/clients may be specific information or known standard messages (like for example CAMs). Responding to the information request may be based on different strategies:
- One time on entry of an area
   This relates for example to a request to measure traffic information/data at certain cross section of a road. If a vehicle is entering the area (or tile), a onetime measurement is taken and reported.
- One time on entry, one time on exit of an area
   This relates to for example an average speed measurement using two measurement points along a road. When the two measurements of a vehicle entering and exiting an area are correlated, the average speed of that vehicle can be calculated over that area (for example part of a road).
- On tile change
   Every time a vehicle changes a tile within the measurement area (for example responding with information piggy-backed along with a location update message of the vehicle sent to the GE).
- Periodic (time)
   While in the requested area, a vehicle responds every x seconds. X is an interval to be defined for example by the GE or the SP.
- Periodic (space)
   While in the requested area, the vehicle should respond every y meters. y is an interval to be defined for example by the GE or the SP.
- Micro-Tile based
   The measurement area may be logically subdivided into smaller tiles, which are transferred to the vehicle. The vehicle may then respond at the crossing of each of the borders of the smaller tiles.

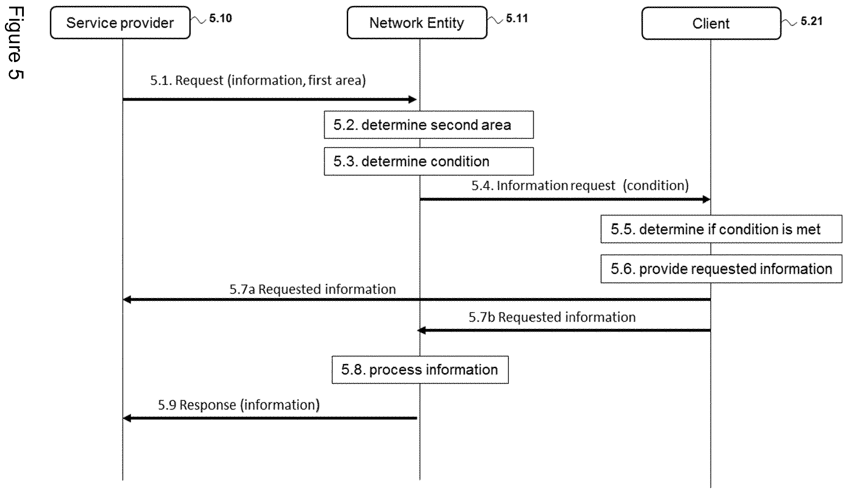

Figure 5 is an example message flow diagram illustrating the messages exchanged between a SP 5.10, a network entity 5.11 (which may be a GE or a combined GE/GR entity) and a client 5.21 (which may be a vehicle or sensor) and the steps performed by those entities. There may be network entity between the shown elements which are not shown (for example a GR between the SP 5.10 and a GE 5.11).

SP 5.10 sends a request (5.1) for information related to clients located in a first area to a network entity 5.11. Network entity 5.11 serves the first area or a part of the first area. The request 5.11 may, in addition to the first area, comprise additional information (for example spatial information related to the requested information or details when the requested information should be reported).

The network entity 5.11 receives the request and determines in step 5.2 a second area based on the first area, wherein the second area overlaps with the first area. The second area may comprise the first area or only parts of the first area. Optionally the network entity 5.11 may determine a condition 5.3 defining when a client should respond to a request. The condition may be determined based on information in the request 5.1, for example the condition may be the first area, a subset of the first area or may relate to the requested information. Alternatively the condition may be received already with the request 5.1. The network entity sends an information request 5.4 comprising the condition to one or more clients 5.21 located in the second area.

The client 5.21 receives the information request 5.4, determines in step 5.5 if the condition received with the information request 5.4 is met, and if the condition is met provides the requested information in step 5.6. Providing the requested information may comprise for example measuring the requested information, calculating the requested information, extracting the requested information from history data or requesting the requested information from other clients (non-exhaustive list). Finally the client responds to the request 5.4 and sends the requested information either to the network entity 5.11 (step 5.7b) or directly to the SP 5.10 (step 5.7a) if the condition is met.

Network entity 5.11 may receive the requested information in step 5.7b from one or more clients, may aggregate and/or process in step 5.8 the requested information, and sends it in step 5.9 back to the SP 5.10 in response to the request 5.1.

By limiting the request 5.4 transmitted from the network entity 5.11 to the client 5.21 to the second area, and by providing a condition (5.3, 5.4) defining when the client should respond, traffic in the underlying communication network is reduced/optimized and it is ensured that only responses containing the requested information are send by client 5.21. The later aspect leads to better quality of collected responses information.

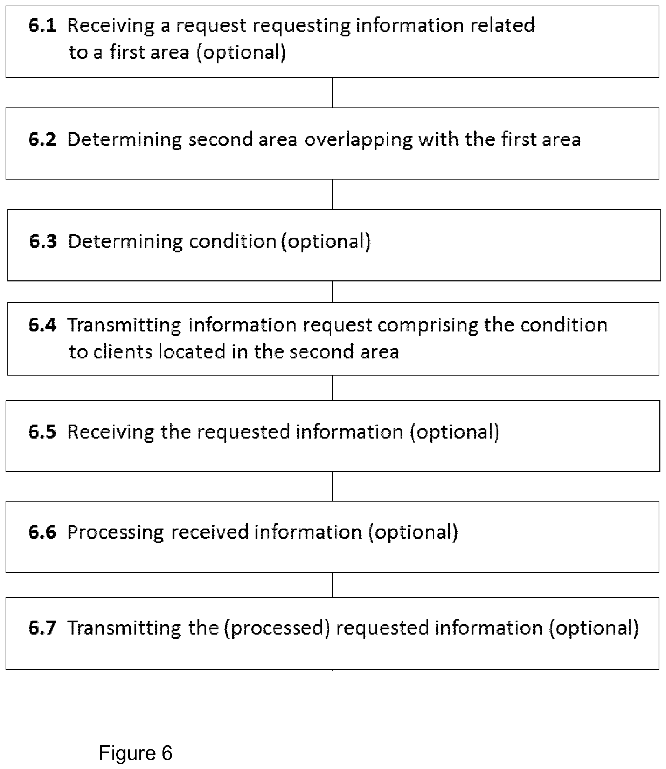

Figure 6 shows a method performed by a network entity, for example the network entity 5.11 of Figure 5 or the GE 3.2 of Figures 3B to 3D. As already described with respect to steps 5.1 to 5.4 and 5.7b to 5.9 of Figure 5, the network entity performs the following method steps:

In a first optional method step 6.1 a request is received requesting information related to a first area. Such a request may be received from a service provider or a GR.

In a second step 6.2 a second area is determined overlapping with the first area. The second area may comprise the first area completely or may partly overlap with the first area.

In a third optional step 6.3 a condition is determined defining when a client shall respond to an information request. The condition may be determined based on information being part of the request received in step 6.1. The condition may be also extracted from the request received in step 6.1.

Then in step 6.4 an information request is transmitted to at least one client located in the second area, wherein the information request comprises the condition. The information request maybe a combined information request based on several received requests under step 6.1, especially if those several requests relate to the same first area. This has the effect of further optimising the utilisation of transmission resources of the underlying communication network (reducing of transmission load).

In optional step 6.5 the requested information is received from one or more clients. This step is optional, since the client may also send the requested information directly to a service provider or another entity (for example the network entity which has send the request received in step 6.1) and so bypass the network entity (bypass for example network enity 5.11 of Figure 5 or the GE 3.2 of Figures 3B to 3D).

The optional received requested information may be then aggregated or processed in step 6.6 before it is further transmitted in step 6.7 which is also optional. The requested information may be also transmitted without aggregation/processing, in this case step 6.6 is skipped.

For the purpose of aggregation or processing step 6.6, earlier collected and stored history information may be used and may be combined together with the received requested information. Information from several independent requests received in step 6.1 may be also aggregated together, especially when those requests relate to the same first area. This has the further effect of optimising the utilisation of transmission resources of the underlying communication network when performing the transmitting of the aggregated information in step 6.7 (reducing of transmission load).

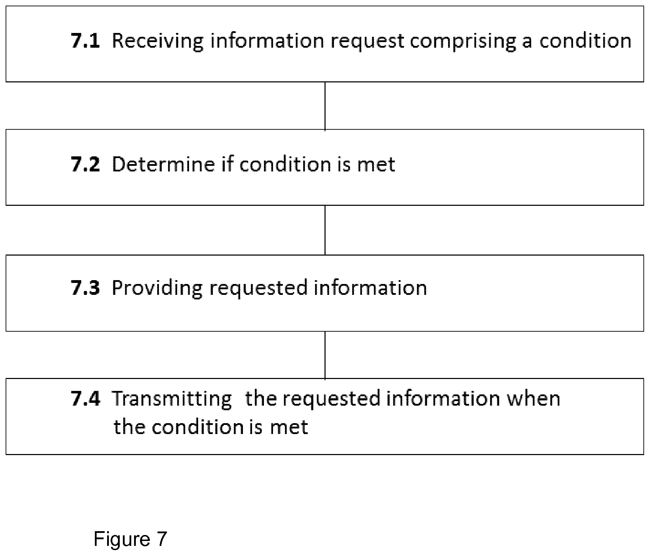

Figure 7 shows a method performed by a client, for example the client 5.21 of Figure 5 or the vehicle 3.7 of Figures 3B to 3D. As already described with respect to steps 5.4 to 5.7a/b the client performs the following method steps:
In step 7.1 the client receives an information request comprising a condition.

The client determines in step 7.2 if the condition is met and provides in step 7.3 the requested information. The providing of the requested information may be done before or after step 7.2. If the providing is done after step 7.2, the providing of the requested information may be only done when the condition is met. Providing may be done by measuring/collecting the requested information utilizing for example sensors or other clients. Further providing may be to calculate the requested information (for example by taking several measurements or collected information elements into account) or by using history information which may be stored in a memory of the client.

Finally the client transmits in step 7.4 the requested information when the condition is met.

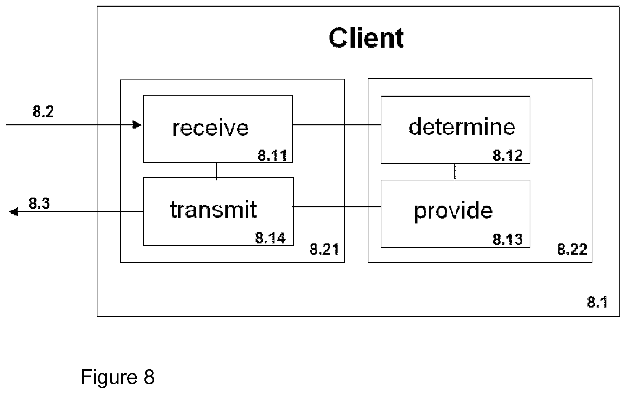

Figure 8 illustrates a client 8.1 adapted to perform the method as described in relationship with Figure 7. The client 8.1 of Figure 8 may be the client 5.21 of Figure 5 or one of the clients 3.7 to 3.11 of Figures 3B to 3D.

Client 8.1 comprises an interface 8.21 which may further comprise of a means 8.11 for receiving information 8.2, and a means 8.14 for transmitting information 8.3. The means 8.11 and the means 8.14 may be combined in one transceiver means (not shown). The received information 8.2 may be a received information request (see for example step 7.1 of Figure 7, message 5.4 of Figure 5 or request 3.18 of Figure 3B to 3D), the transmitted information 8.3 may be the requested information (see for example step 7.4 of Figure 7, messages 5.7a and 5.7b of Figure 5 or response 3.18* of Figures 3B to 3D).

Client 8.1 further comprises a processing unit 8.22 which may further comprise a means 8.12 for determining if a condition is met (see step 7.2 of Figure 7 or 5.5 of Figure 5) and a means for providing the requested information (see step 7.3 of Figure 7 or 5.6 of Figure 5).

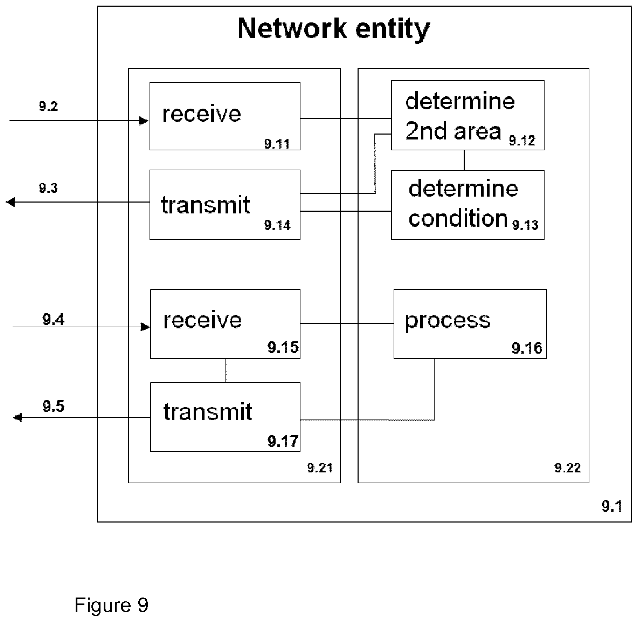

Figure 9 shows a network entity 9.1 adapted to perform the method as described in relationship with Figure 6. The network entity 9.1 of Figure 9 may be the network entity 5.11 of Figure 5 or the GE 3.2 of Figures 3B to 3D.

Network entity 9.1 comprises an interface 9.21 which may further comprise of means 9.11/9.15 for receiving information 9.2/9.4 and means 9.14/9.17 for transmitting information 9.3/9.5. The two means 9.2 and 9.4 may be combined in one means for receiving (not shown), the two means 9.3 and 9.5 may be combined in one means for transmitting (not shown). Further the means of or receiving and transmitting may be combined in one or two transceiver means (not shown).

The received information 9.2 may be a received request (see for example step 6.1 of Figure 6, message 5.1 of Figure 5 or request 3.12 of Figure 3B to 3D). The transmitted information 9.3 may be an information request (see for example step 6.4 of Figure 6, messages 5.4 of Figure 5 or request 3.18 of Figures 3B to 3D). The received information 9.4 may be the requested information (see for example step 6.5 of Figure 6, message 5.7b of Figure 5 or response 3.18* of Figure 3B to 3D). The transmitted information 9.5 may be a response to request 9.2 (see for example step 6.7 of Figure 6, messages 5.9 of Figure 5 or response 3.13 of Figures 3B to 3D).

Client 9.1 further comprises a processing unit 9.22 which may further comprise a means 9.12 for determining a second area (see step 6.2 of Figure 6 or 5.2 of Figure 5), a means 9.13 for determining a condition (see step 6.3 of Figure 6 or 5.3 of Figure 5) and a means 9.16 for processing or aggregating the received requested information (see step 6.6 of Figure 6 and 5.8 of Figure 5).

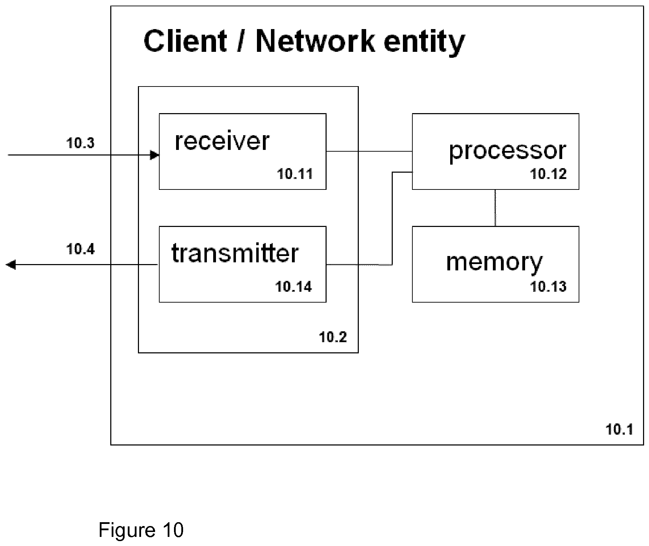

Figure 10 is an example block diagram illustrating embodiments of a network entity 9.1 (for example a server or geographic enabler) and of a client 8.1 (for example mobile device like a mobile phone, a smart phone, a PDA (Personal Digital Assistant) or a portable computer (e.g., laptop, tablet); a vehicle like for example a car, a truck, a bike, a plane, a ship or a submarine, a machine-to-machine device like for example a sensor or any other device that can provide wireless communication). A client may also be referred to as a radio node, user equipment (UE), or an on-board unit in a further device, like for example a car or a vehicle which may move on the ground, airborne or underwater. Further examples of a network entity may a gateway, a controller, a base station or any other network element.

The element may comprise an interface 10.2, a processor 10.12 and a memory 10.13. The interface 10.2 may further comprise a receiver 10.11 and a transmitter 10.14. The receiver 10.11 and the transmitter 10.14 may be combined in a transceiver (not shown). The receiver may receive signals 10.3 and the transmitter may transmit signals 10.4 from and to the element 10.1. Signals may be transmitted wirelessly (e.g., via an antenna which is not shown). Processor 10.12 may execute instructions to provide some or all of the functionality described above as being provided by the network entity and the client (refer to Figures 3B to 3D, 4A, 4B, 5, 6 and 7), and memory 10.13 may store instructions executed by processor 10.12.

Processor 10.12 may comprise any suitable combination of hardware and software implemented in one or more modules to execute instructions and manipulate information/data to perform some or all of the described functions of the elements (for example the client or the network entity). In some embodiments, processor 10.12 may comprise one or more computers, one or more central processing units (CPUs), one or more microprocessors, one or more applications, and/or other logic.

Memory 10.13 may be generally operable to store instructions, such as a computer program, software, an application comprising one or more of logic, rules, algorithms, code, tables, etc. and/or other instructions capable of being executed by a processor. Examples of memory 10.13 may comprise computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

Alternative embodiments of the client 8.1, the network entity 9.1 and the element 10.1 may comprise additional components beyond those shown in Figures 8 to 10. Those additional components may provide certain aspects of the functionality, including any of the functionality described herein and/or any additional functionality (including any functionality necessary to support the solution described herein).

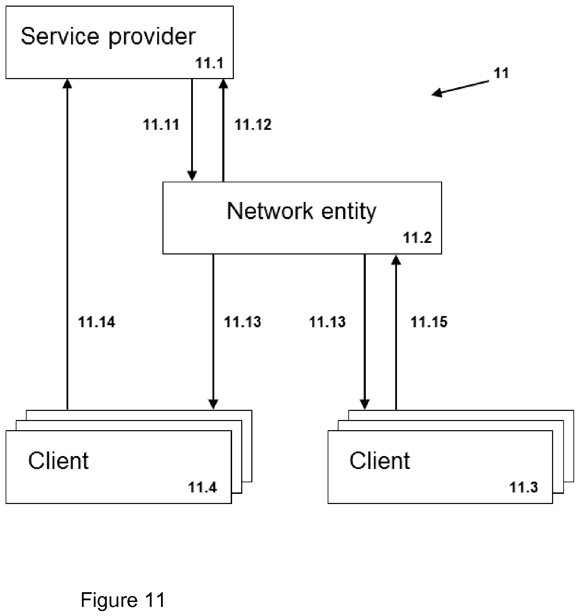

Figure 11 shows an example system 11 utilizing the methods and network element described above. System 11 comprises a Service Provider 11.1 (for example SP 5.10 of Figure 5), a network entity 11.2 (for example the network entity 5.11 of Figure 5) and clients 11.3 and 11.4 (corresponding for example to client 5.21 of Figure 5). SP 11.1 communicates (11.11 and 11.12) with the network entity 11.2 (11.11 and 11.12) and may also receive (11.14) information directly from client(s) 11.4. Network entity 11.2 communicates (11.11, 11.12) with the SP 11.1 and with the clients 11.3 and 11.4 (11.13, 11.15).

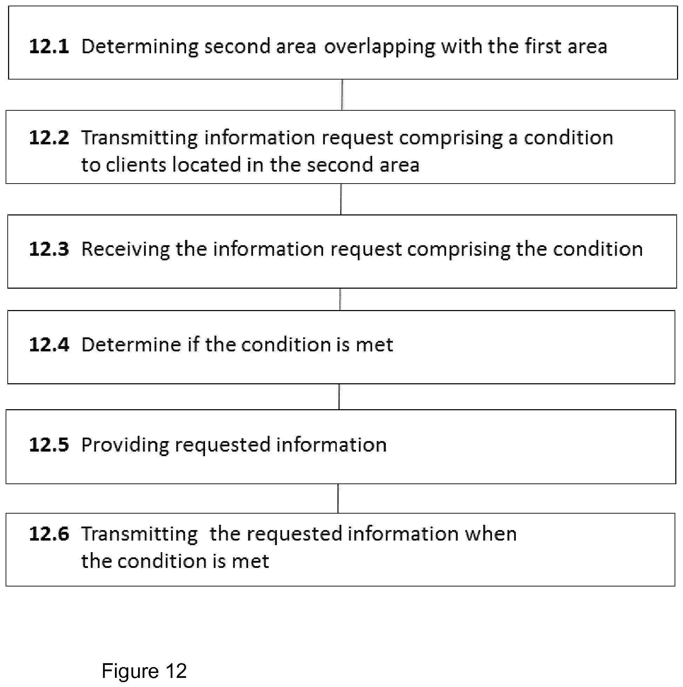

Figure 12 illustrates an example method for providing requested information which may be performed by a system according to Figure 11. In a first step 12.1 a second area is determined overlapping with the first area. Then in step 12.2 an information request is transmitted to at least one client located in the second area, wherein the information request comprises a condition. In step 12.3 the client receives the information request comprising the condition, determines in step 12.4 if the condition is met, provides the requested information in step 12.5 and transmits in step 12.6 the requested information when the condition is met.

Various different types of elements may comprise components having the same physical hardware but may be configured (e.g., via programming) to support different radio access technologies, or may represent partly or entirely different physical components.

Some embodiments of the disclosure may provide one or more technical advantages. Some embodiments may benefit from some, none, or all of these advantages. Other technical advantages may be readily ascertained by one of ordinary skill in the art.

In a first example embodiment a method for a first network entity requesting information from clients located in a first area is provided, said method comprising determining a second area overlapping with the first area, and transmitting an information request to clients located in the second area, wherein said information request comprises a condition defining when a client shall respond to the information request.

Refinements of the method according to the first example embodiment may be wherein
- the second area may cover the first area partly.
- the determining of the second area may comprise correlating the first area with spatial information.
- the second area may comprise one or more tiles.
- the information request may comprise a location where to collect the requested information or an area for collecting the requested information.
- the method may further comprise receiving the requested information from a sub-set of the clients located in the second area.
- the requested information may be received over an encrypted connection or as anonymized information.
- the method may further comprise receiving a request from a second network entity, wherein the request may request information related to the first area.
- the method may further comprise determining the condition based on information received with the request.
- the method may further comprise transmitting a response to the second network entity, wherein the response may comprise information based on the received requested information from the sub-set of the clients located in the second area.
- the method may further comprise processing the received requested information before transmitting it to the second network entity.
- the condition may comprise one or more of
   - the client possesses the requested information;
   - the client meets a spatial requirement;
   - the client being at a location or passing the location;
   - the client being located in an area;
   - the client leaving or joining the area;
   - the density of other clients around the client exceed a threshold;
   - the speed of the client crosses a threshold;
   - the speed of the clients is above or below a threshold; and
   - the client is moving in a defined direction.
- the requested information may comprise one or more of
   - a Cooperative Awareness Message message or a subset of a Cooperative Awareness Message;
   - a Decentralized Environmental Notification Message or a subset of a Decentralized Environmental Notification Message;
   - floating car data;
   - raw data;
   - pre-processed data; and
   - history data.
- the first network element may comprise a server, preferably a geographic enabler.

In a second example embodiment a method for a client for providing information requested by a first network entity is disclosed, said method comprises receiving an information request from the first network entity, wherein said information request comprising a condition defining when to respond to the information request. The method further comprises determining if the condition is met, providing the requested information, and transmitting the requested information when the condition is met.

Refinements of the method according to the second example embodiment may be wherein
- the requested information may be transmitted to the first network entity or to a second network entity.
- the condition may comprise one or more of
   - the client possesses the requested information;
   - the client meets a spatial requirement;
   - the client being at a location or passing the location;
   - the client being located in an area;
   - the client leaving or joining the area;
   - the density of other clients around the client exceed a threshold;
   - the speed of the client crosses a threshold;
   - the speed of the client is above or below a threshold; and
   - the client is moving in a defined direction.
- the requested information may comprise one or more of
   - a Cooperative Awareness Message message or a subset of a Cooperative Awareness Message;
   - a Decentralized Environmental Notification Message or a subset of a Decentralized Environmental Notification Message;
   - floating car data;
   - raw data;
   - pre-processed data; and
   - history data.
- the information request may comprise a location where to collect the requested information or an area where to collect the requested information.
- the requested information may be transmitted over an encrypted connection or as anonymized data.
- the client may comprise one of a vehicle and a sensor and a mobile device.

In a third example embodiment a network entity configured to request information from clients located in a first area is provided, the first network entity comprising at least one processing unit configured to determine a second area overlapping with the first area, and an interface configured to transmit an information request to clients located in the second area, wherein said information request comprises a condition defining when a client shall respond to the information request.

Refinements of the network entity according to the third example embodiment may be wherein
- the second area may cover the first area partly.
- to determine a second area may comprise correlating the first area with spatial information
- the second area may comprise one or more tiles.
- the transmitted information request may comprise a location where to collect the requested information or an area for collecting the requested information.
- the interface may be configured to receive the requested information from a sub-set of the clients located in the second area.
- the requested information may be received over an encrypted connection or as anonymized information.
- the interface may be configured to receive a request from a second network entity, wherein the request requests information related to the first area.
- the processing unit may be configured to determine the condition based on information received with the request.
- the interface may be configured to transmit a response to the second network entity, wherein the response may comprise information based on the received requested information from the sub-set of the clients located in the second area.
- the processing unit may be configured to process the received requested information before transmitting it to the second network entity.
- the condition may comprise one or more of
   - the client possesses the requested information;
   - the client meets a spatial requirement;
   - the client being at a location or passing the location;
   - the client being located in an area;
   - the client leaving or joining the area;
   - the density of other clients around the client exceed a threshold;
   - the speed of the client crosses a threshold;
   - the speed of the clients is above or below a threshold; and
   - the client is moving in a defined direction.
- the requested information may comprise one or more of
   - a Cooperative Awareness Message message or a subset of a Cooperative Awareness Message;
   - a Decentralized Environmental Notification Message or a subset of a Decentralized Environmental Notification Message;
   - floating car data;
   - raw data;
   - pre-processed data; and
   - history data.
- the first network element may comprise a server, preferably a geographic enabler.

In a fourth example embodiment a network entity for requesting information from clients located in a first area is provided, the first network entity comprising a means for determining a second area overlapping with the first area, and a means for transmitting an information request to clients located in the second area, wherein said information request comprises a condition defining when a client shall respond to the information request.

Refinements of the network entity according to the fourth example embodiment may be according to the refinements of the network entity of the third example embodiment.

In a fifth example embodiment a client configured to provide information requested by a first network entity, the client comprising an interface configured to receive an information request from the first network entity, wherein said information request comprises a condition defining when to respond to the information request, and to transmit the requested information when a condition is met. The client further comprises at least one processing unit configured to provide the requested information, and to determine if the condition is met.

Refinements of the client according to the fifth example embodiment may be wherein
- the requested information may be transmitted to the first network entity or to a second network entity.
- the condition may comprise one or more of
   - the client possesses the requested information;
   - the client meets a spatial requirement;
   - the client being at a location or passing the location;
   - the client being located in an area;
   - the client leaving or joining the area;
   - the density of other clients around the client exceed a threshold;
   - the speed of the client crosses a threshold;
   - the speed of the client is above or below a threshold; and
   - the client is moving in a defined direction.
- the requested information may comprise one or more of
   - a Cooperative Awareness Message message or a subset of a Cooperative Awareness Message;
   - a Decentralized Environmental Notification Message or a subset of a Decentralized Environmental Notification Message;
   - floating car data;
   - raw data;
   - pre-processed data; and
   - history data.
- the information request may comprise a location where to collect the requested information or an area where to collect the requested information.
- the requested information may be transmitted over an encrypted connection or as anonymized data.
- the client may comprises one of a vehicle and a sensor and a mobile device.

In a sixth example embodiment a client for providing information requested by a first network entity is provided, the client comprising a means for receiving an information request from the first network entity, wherein said information request comprises a condition defining when to respond to the information request. The client further comprising a means for determining if the condition is met, a means for providing the requested information and a means for transmitting the requested information when the condition is met.

Refinements of the network entity according to the sixth example embodiment may be according to the refinements of the network entity of the fifth example embodiment.

In a seventh example embodiment a computer program comprising program code to be executed by at least one processing unit of a first network entity is provided, wherein execution of the program code causes the at least one processing unit to execute a method according to the first example embodiment.

Refinements of the computer program according to the seventh example embodiment may be according to the refinements of the method of the first example embodiment.

In an eighth example embodiment a computer program comprising program code to be executed by at least one processing unit of a first network entity is provided, wherein execution of the program code causes the at least one processing unit to execute a method according to the second example embodiment.

Refinements of the computer program according to the eighth example embodiment may be according to the refinements of the method of the second example embodiment.

In a ninth example embodiment a system for providing requested information from clients located in a first area is provided, the system comprising a first network entity according to the third or fourth embodiment and at least one client according the fifth or sixth embodiment.

In a tenth example embodiment a method for providing requested information from clients located in a first area is disclosed, the method comprising determining a second area overlapping with the first area, transmitting an information request to clients located in the second area, wherein said information request comprises a condition defining when a client shall respond to the information request. The method further comprising receiving the information request, determining if the condition is met, providing the requested information, and transmitting the requested information when the condition is met.

It is to be understood that the examples and embodiments as explained above are merely illustrative and susceptible to various modifications. For example, the concepts could be used in other types of communication networks, not explicitly mentioned so far. Further, it is to be understood that the above concepts may be implemented by using correspondingly designed software in existing nodes, or by using dedicated hardware in the respective nodes.

### Abbreviations:

- 5G: 5^{th} Generation (5^{th} Generation Mobile Network)
- CAM: Cooperative Awareness Message
- CD: Compact Disk
- C-ITS: Cooperative Intelligent Traffic System
- DENM: Decentralized Environmental Notification Message
- DVD: Digital Video Disk
- ETSI: European Telecommunications Standards Institute
- EU: European Union
- FCD: Floating Car Data
- GE: Geographic Enabler
- GLM: Geo Location Messaging
- GPS: Global Positioning System
- GSM: Global System for Mobile Communications
- GR: Geographic Receiver
- Hz: Hertz
- IEEE: Institute of Electrical and Electronics Engineers
- IP: Internet Protocol
- IRS: ITS road side station / Roadside Station
- ITS: Intelligent Transport System
- IVS: In vehicle system / ITS Vehicle Station
- LTE: Long Term Evolution
- NFC: Near Field Communication
- RAM: Random Access Memory
- ROM: Read Only Memory
- RSU: Road Site Unit
- SP: Service Provider
- TMC: Traffic Management Center
- UMTS: Universal Mobile Telecommunications System
- US: United States
- V2I: Vehicle to Infrastructure
- V2V: Vehicle to Vehicle
- WiFi: any kind of WLAN network, synonym to WLAN
- WLAN: Wireless Local Area Network

## Claims

1. A method performed by a first network entity (1.3, 3.2) requesting information from clients (3.7, 3.10, 3.11) located in a first area (3.5), said method comprising:
- receiving (6.1) a request (3.12, 1.12) from a second network entity (1.2) requesting information related to the first area (3.5);
- determining (6.2) a second area (3.6, 3.6*) overlapping with the first area (3.5);
- determining (6.3) a condition based on information received with the request (3.12, 1.12); and
- transmitting (6.4) an information request (3.14, 3.16, 3.18) comprising the condition to clients (3.7, 3.8, 3.10) located in the second area (3.6, 3.6*);
wherein the condition defines when a client shall respond (3.18*) to the information request (3.14, 3.16, 3.18).

2. The method of claim 1, wherein the second area (3.6, 3.6*) covers the first area (3.5) partly, and wherein the determining (6.2) of the second area (3.6, 3.6*) comprises correlating the first area (3.5) with spatial information (3.4).

3. The method of claim 1 or 2, the method further comprising:
- receiving (6.5) the requested information from a sub-set (3.7) of the clients (3.7, 3.8, 3.10) located in the second area (3.6, 3.6*).

4. The method of claim 3, wherein the requested information is received over an encrypted connection or as anonymized information.

5. The method of any of the claims 1 to 4, the method further comprising:
- transmitting (6.7) a response (1.16, 3.13) to the second network entity (1.2),
wherein the response (1.16, 3.13) comprises information based on the received requested information from the sub-set (3.7) of the clients (3.7, 3.8, 3.10) located in the second area (3.6, 3.6*).

6. A method for a client (3.7), providing information requested by a first network entity (1.3, 3.2), said method comprising:
- receiving (7.1, 3.18) an information request and a targeted relevance area from the first network entity (1.3, 3.2), wherein said information request is sent to the first network entity (1.3, 3.2) by a second network entity (1.2), wherein said information request comprises a condition defining when the client (3.7) responds to the information request, and wherein the targeted relevance area is an area where the information request from the second network entity (1.2) is targeted to;
- determining if the condition is met and the client (3.7) is in the targeted relevance area;
- providing (7.3) the requested information; and
- transmitting (7.4, 3.18*) the requested information when the condition is met or ignoring the information request if the condition is not met.

7. The method of claim 6, wherein the requested information is transmitted to the first network entity (3.2, 1.3) or to the second network entity (1.2).

8. The method of claim 6 or 7, wherein the requested information is transmitted over an encrypted connection or as anonymized data.

9. The method of any of the claims 1 to 8, wherein the condition comprises one or more of:
- the client (3.7) possesses the requested information;
- the client (3.7) meets a spatial requirement;
- the client (3.7) being at a location (4.2) or passing the location (4.2);
- the client (3.7) being located in an area (4.3);
- the client (3.7) leaving or joining the area (4.3);
- density of other clients around the client (3.7) exceed a threshold;
- speed of the client (3.7) crosses a threshold;
- speed of the client (3.7) is above or below a threshold; and
- the client (3.7) is moving in a defined direction.

10. The method of any of the claims 1 to 9, wherein the requested information comprises one or more of:
- a Cooperative Awareness Message or a subset of the Cooperative Awareness Message;
- a Decentralized Environmental Notification Message or a subset of the Decentralized Environmental Notification Message;
- floating car data;
- raw data;
- pre-processed data; and
- history data.

11. A first network entity (1.3, 3.2) configured to request information from clients (3.7, 3.10, 3.11) located in a first area (3.5), the first network entity (1.3, 3.2) comprising:
- at least one processing unit (9.22, 10.12) configured to:
- determine (6.2) a second area (3.6, 3.6*) overlapping with the first area (3.5); and
- determine (6.3) a condition based on information received with a request (3.12, 1.12);
- an interface (9.21, 10.2) configured to:
- receive (6.1) the request (3.12, 1.12) from a second network entity (1.2) requesting information related to the first area (3.5); and
- transmit an information request (3.14, 3.16, 3.18) comprising the condition to clients (3.7, 3.8, 3.10) located in the second area (3.6, 3.6*);
wherein said information request defines when a client shall respond (3.18*) to the information request (3.14, 3.16, 3.18).

12. The first network entity (1.3, 3.2) of claim 11 is further configured to perform the method of any of the claims 2 to 5 and 9 or 10.

13. A client (3.7) configured to provide information requested by a first network entity (1.3, 3.2), the client (3.7) comprising:
- an interface (8.21, 10.2) configured to:
- receive (7.1, 3.18) an information request and a targeted relevance area from the first network entity (1.3, 3.2), wherein said information request is sent to the first network entity (1.3, 3.2) by a second network entity (1.2), wherein said information request comprises a condition defining when the client (3.7) responds to the information request, and wherein the targeted relevance area is an area where the information request from the second network entity (1.2) is targeted to; and
- transmit (7.4, 3.18*) the requested information when the condition is met or ignore the information request if the condition is not met;
- at least one processing unit (8.22, 10.12) configured to:
- determine if the condition is met and the client (3.7) is in the targeted relevance area; and
- provide (7.3) the requested information.

14. The client (3.7) of claim 13 further configured to perform the method of any of the claims 7 to 10.

15. A computer program comprising program code to be executed by at least one processing unit (8.22, 9.22, 10.12), wherein execution of the program code causes the at least one processing unit (8.22, 9.22, 10.12) to execute a method according to any of claims 1 to 10.

## Patentansprüche

1. Verfahren, das von einer ersten Netzwerkeinheit (1.3, 3.2) durchgeführt wird, zum Anfordern von Informationen von Clients (3.7, 3.10, 3.11) die sich in einem ersten Bereich (3.5) befinden, wobei das Verfahren Folgendes umfasst:
- Empfangen (6.1) einer Anfrage (3.12, 1.12) von einer zweiten Netzwerkeinheit (1.2), die Informationen bezüglich des ersten Bereichs (3.5) anfordert;
- Bestimmen (6.2) eines zweiten Bereichs (3.6, 3.6*), der den ersten Bereich (3.5) überlappt;
- Bestimmen (6.3) einer Bedingung auf Grundlage von Informationen, die mit der Anfrage (3.12, 1.12) empfangen werden; und
- Übertragen (6.4) einer Informationsanfrage (3.14, 3.16, 3.18), welche die Bedingung umfasst, an Clients (3.7, 3.8, 3.10), die sich in dem zweiten Bereich (3.6, 3.6*) befinden;
wobei die Bedingung definiert, wann ein Client auf die Informationsanfrage (3.14, 3.16, 3.18) antworten soll (3.18*).

2. Verfahren nach Anspruch 1, wobei der zweite Bereich (3.6, 3.6*) den ersten Bereich (3.5) teilweise abdeckt und wobei das Bestimmen (6.2) des zweiten Bereichs (3.6, 3.6*) ein Korrelieren des ersten Bereichs (3.5) mit räumlichen Informationen (3.4) umfasst.

3. Verfahren nach Anspruch 1 oder 2, wobei das Verfahren ferner Folgendes umfasst:
- Empfangen (6.5) der angeforderten Informationen von einem Teilsatz (3.7) der Clients (3.7, 3.8, 3.10), die sich in dem zweiten Bereich (3.6, 3.6*) befinden.

4. Verfahren nach Anspruch 3, wobei die angeforderten Informationen über eine verschlüsselte Verbindung oder als anonymisierte Informationen empfangen werden.

5. Verfahren nach einem der Ansprüche 1 bis 4, wobei das Verfahren ferner Folgendes umfasst:
- Übertragen (6.7) einer Antwort (1.16, 3.13) an die zweite Netzwerkeinheit (1.2), wobei die Antwort (1.16, 3.13) Informationen auf Grundlage der empfangenen angeforderten Informationen von dem Teilsatz (3.7) der Clients (3.7, 3.8, 3.10), die sich in dem zweiten Bereich (3.6, 3.6*) befinden, umfasst.

6. Verfahren für einen Client (3.7) zum Bereitstellen von Informationen, die von einer ersten Netzwerkeinheit (1.3, 3.2) angefordert werden, wobei das Verfahren Folgendes umfasst:
- Empfangen (7.1, 3.18) einer Informationsanfrage und eines Zielrelevanzbereichs von der ersten Netzwerkeinheit (1.3, 3.2), wobei die Informationsanfrage von einer zweiten Netzwerkeinheit (1.2) an die erste Netzwerkeinheit (1.3, 3.2) gesendet wird, wobei die Informationsanfrage eine Bedingung umfasst, die definiert, wann der Client (3.7) auf die Informationsanfrage antwortet, und wobei der Zielrelevanzbereich ein Bereich ist, an den die Informationsanfrage von der zweiten Netzwerkeinheit (1.2) gerichtet ist;
- Bestimmen, ob die Bedingung erfüllt ist und sich der Client (3.7) in dem Zielrelevanzbereich befindet;
- Bereitstellen (7.3) der angeforderten Informationen; und
- Übertragen (7.4, 3.18*) der angeforderten Informationen, wenn die Bedingung erfüllt ist, oder Ignorieren der Informationsanfrage, wenn die Bedingung nicht erfüllt ist.

7. Verfahren nach Anspruch 6, wobei die angeforderten Informationen an die erste Netzwerkeinheit (3.2, 1.3) oder an die zweite Netzwerkeinheit (1.2) übertragen werden.

8. Verfahren nach Anspruch 6 oder 7, wobei die angeforderten Informationen über eine verschlüsselte Verbindung oder als anonymisierte Daten übertragen werden.

9. Verfahren nach einem der Ansprüche 1 bis 8, wobei die Bedingung eines oder mehrere des Folgenden umfasst:
- der Client (3.7) verfügt über die angeforderten Informationen;
- der Client (3.7) erfüllt eine räumliche Voraussetzung;
- der Client (3.7) befindet sich an einem Standort (4.2) oder passiert den Standort (4.2);
- der Client (3.7) befindet sich in einem Bereich (4.3);
- der Client (3.7) verlässt den Bereich (4.3) oder verbindet sich mit diesem;
- die Dichte anderer Clients um den Client (3.7) übersteigt einen Schwellenwert;
- die Geschwindigkeit des Clients (3.7) überschreitet einen Schwellenwert;
- die Geschwindigkeit des Clients (3.7) liegt über oder unter einem Schwellenwert; und
- der Client (3.7) bewegt sich in eine definierte Richtung.

10. Verfahren nach einem der Ansprüche 1 bis 9, wobei die angeforderten Informationen eines oder mehrere des Folgenden umfassen:
- eine Cooperative-Awareness-Message oder einen Teilsatz der Cooperative-Awareness-Message;
- eine Decentralized-Environmental-Notification-Message oder einen Teilsatz der Decentralized-Environmental-Notification-Message;
- Floating-Car-Daten;
- Rohdaten;
- vorverarbeitete Daten; und
- Verlaufsdaten.

11. Erste Netzwerkeinheit (1.3, 3.2), die dazu konfiguriert ist, Informationen von Clients (3.7, 3.10, 3.11) anzufordern, die sich in einem ersten Bereich (3.5) befinden, wobei die erste Netzwerkeinheit (1.3, 3.2) Folgendes umfasst:
- mindestens eine Verarbeitungseinheit (9.22, 10.12), die für Folgendes konfiguriert ist:
- Bestimmen (6.2) eines zweiten Bereichs (3.6, 3.6*), der den ersten Bereich (3.5) überlappt; und
- Bestimmen (6.3) einer Bedingung auf Grundlage der Informationen, die mit einer Anfrage (3.12, 1.12) empfangen werden;
- eine Schnittstelle (9.21, 10.2), die für Folgendes konfiguriert ist:
- Empfangen (6.1) der Anfrage (3.12, 1.12) von einer zweiten Netzwerkeinheit (1.2), die Informationen bezüglich des ersten Bereichs (3.5) anfordert; und
- Übertragen einer Informationsanfrage (3.14, 3.16, 3.18), welche die Bedingung umfasst, an Clients (3.7, 3.8, 3.10), die sich in dem zweiten Bereich (3.6, 3.6*) befinden;
wobei die Informationsanfrage definiert, wann ein Client auf die Informationsanfrage (3.14, 3.16, 3.18) antworten soll (3.18*).

12. Erste Netzwerkeinheit (1.3, 3.2) nach Anspruch 11, die ferner dazu konfiguriert ist, das Verfahren nach einem der Ansprüche 2 bis 5 und 9 oder 10 durchzuführen.

13. Client (3.7), der dazu konfiguriert ist, Informationen bereitzustellen, die von einer ersten Netzwerkeinheit (1.3, 3.2) angefordert werden, wobei der Client (3.7) Folgendes umfasst:
- eine Schnittstelle (8.21, 10.2), die für Folgendes konfiguriert ist:
- Empfangen (7.1, 3.18) einer Informationsanfrage und eines Zielrelevanzbereichs von der ersten Netzwerkeinheit (1.3, 3.2), wobei die Informationsanfrage von einer zweiten Netzwerkeinheit (1.2) an die erste Netzwerkeinheit (1.3, 3.2) gesendet wird, wobei die Informationsanfrage eine Bedingung umfasst, die definiert, wann ein Client (3.7) auf die Informationsanfrage antwortet, und wobei der Zielrelevanzbereich ein Bereich ist, an den die Informationsanfrage von der zweiten Netzwerkeinheit (1.2) gerichtet ist; und
- Übertragen (7.4, 3.18*) der angeforderten Informationen, wenn die Bedingung erfüllt ist, oder Ignorieren der Informationsanfrage, wenn die Bedingung nicht erfüllt ist;
- mindestens eine Verarbeitungseinheit (8.22, 10.12), die für Folgendes konfiguriert ist:
- Bestimmen, ob die Bedingung erfüllt ist und sich der Client (3.7) in dem Zielrelevanzbereich befindet; und
- Bereitstellen (7.3) der angeforderten Informationen.

14. Client (3.7) nach Anspruch 13, der ferner dazu konfiguriert ist, das Verfahren nach einem der Ansprüche 7 bis 10 durchzuführen.

15. Computerprogramm, das Programmcode umfasst, der von mindestens einer Verarbeitungseinheit (8.22, 9.22, 10.12) ausgeführt wird, wobei die Ausführung des Programmcodes die mindestens eine Verarbeitungseinheit (8.22, 9.22, 10.12) dazu veranlasst, ein Verfahren nach einem der Ansprüche 1 bis 10 auszuführen.

## Revendications

1. Procédé réalisé par une première entité de réseau (1.3, 3.2) demandant des informations auprès de clients (3.7, 3.10, 3.11) situés dans une première zone (3.5), ledit procédé comprenant :
- la réception (6.1) d'une demande (3.12, 1.12) depuis une seconde entité de réseau (1.2) demandant des informations liées à la première zone (3.5) ;
- la détermination (6.2) d'une seconde zone (3.6, 3.6*) chevauchant la première zone (3.5) ;
- la détermination (6.3) d'une condition basée sur des informations reçues avec la demande (3.12, 1.12) ; et
- la transmission (6.4) d'une demande d'informations (3.14, 3.16, 3.18) comprenant la condition à des clients (3.7, 3.8, 3.10) situés dans la seconde zone (3.6, 3.6*) ;
dans lequel la condition définit le moment où un client devra répondre (3.18*) à la demande d'informations (3.14, 3.16, 3.18).

2. Procédé selon la revendication 1, dans lequel la seconde zone (3.6, 3.6*) couvre en partie la première zone (3.5), et dans lequel la détermination (6.2) de la seconde zone (3.6, 3.6*) comprend la corrélation de la première zone (3.5) avec des informations spatiales (3.4).

3. Procédé selon la revendication 1 ou 2, le procédé comprenant en outre :
- la réception (6.5) des informations demandées depuis un sous-ensemble (3.7) des clients (3.7, 3.8, 3.10) situés dans la seconde zone (3.6, 3.6*).

4. Procédé selon la revendication 3, dans lequel les informations demandées sont reçues sur une connexion chiffrée ou en tant qu'informations anonymisées.

5. Procédé selon l'une quelconque des revendications 1 à 4, le procédé comprenant en outre :
- la transmission (6.7) d'une réponse (1.16, 3.13) à la seconde entité de réseau (1.2), dans lequel la réponse (1.16, 3.13) comprend des informations basées sur les informations demandées reçues depuis le sous-ensemble (3.7) des clients (3.7, 3.8, 3.10) situés dans la seconde zone (3.6, 3.6*).

6. Procédé pour un client (3.7), fournissant des informations demandées par une première entité de réseau (1.3, 3.2), ledit procédé comprenant :
- la réception (7.1, 3.18) d'une demande d'informations et d'une zone de pertinence ciblée depuis la première entité de réseau (1.3, 3.2), dans lequel ladite demande d'informations est envoyée à la première entité de réseau (1.3, 3.2) par une seconde entité de réseau (1.2), dans lequel ladite demande d'informations comprend une condition définissant le moment où le client (3.7) répond à la demande d'informations, et dans lequel la zone de pertinence ciblée est une zone où la demande d'informations depuis la seconde entité de réseau (1.2) est ciblée ;
- la détermination pour savoir si la condition est satisfaite et le client (3.7) est dans la zone de pertinence ciblée ;
- la fourniture (7.3) des informations demandées ; et
- la transmission (7.4, 3.18*) des informations demandées lorsque la condition est satisfaite ou le fait d'ignorer la demande d'informations si la condition n'est pas satisfaite.

7. Procédé selon la revendication 6, dans lequel les informations demandées sont transmises à la première entité de réseau (3.2, 1.3) ou à la seconde entité de réseau (1.2).

8. Procédé selon la revendication 6 ou 7, dans lequel les informations demandées sont transmises sur une connexion chiffrée ou en tant que données anonymisées.

9. Procédé selon l'une quelconque des revendications 1 à 8, dans lequel la condition comprend un ou plusieurs éléments parmi :
- le client (3.7) possède les informations demandées ;
- le client (3.7) satisfait une exigence spatiale ;
- le client (3.7) est à un emplacement (4.2) ou passe par l'emplacement (4.2) ;
- le client (3.7) est situé dans une zone (4.3) ;
- le client (3.7) quitte ou rejoint la zone (4.3) ;
- une densité d'autres clients autour du client (3.7) dépasse un seuil ;
- une vitesse du client (3.7) passe un seuil ;
- une vitesse du client (3.7) est au-dessus ou en dessous d'un seuil ; et
- le client (3.7) se déplace dans une direction définie.

10. Procédé selon l'une quelconque des revendications 1 à 9, dans lequel les informations demandées comprennent un ou plusieurs éléments parmi :
- un message de conscience coopérative ou un sous-ensemble du message de conscience coopérative ;
- un message de notification environnementale décentralisée ou un sous-ensemble du message de notification environnementale décentralisée ;
- des données de voiture flottante ;
- des données brutes ;
- des données pré-traitées ; et
- des données d'historique.

11. Première entité de réseau (1.3, 3.2) configurée pour demander des informations auprès de clients (3.7, 3.10, 3.11) situés dans une première zone (3.5), la première entité de réseau (1.3, 3.2) comprenant :
- au moins une unité de traitement (9.22, 10.12) configurée pour :
- déterminer (6.2) une seconde zone (3.6, 3.6*) chevauchant la première zone (3.5) ; et
- déterminer (6.3) une condition basée sur des informations reçues avec une demande (3.12, 1.12) ;
- une interface (9.21, 10.2) configurée pour :
- recevoir (6.1) la demande (3.12, 1.12) depuis une seconde entité de réseau (1.2) demandant des informations liées à la première zone (3.5) ; et
- transmettre une demande d'informations (3.14, 3.16, 3.18) comprenant la condition à des clients (3.7, 3.8, 3.10) situés dans la seconde zone (3.6, 3.6*) ;
dans laquelle ladite demande d'informations définit le moment où un client devra répondre (3.18*) à la demande d'informations (3.14, 3.16, 3.18).

12. Première entité de réseau (1.3, 3.2) selon la revendication 11, configurée en outre pour réaliser le procédé de l'une quelconque des revendications 2 à 5 et 9 ou 10.

13. Client (3.7) configuré pour fournir des informations demandées par une première entité de réseau (1.3, 3.2), le client (3.7) comprenant :
- une interface (8.21, 10.2) configurée pour :
- recevoir (7.1, 3.18) une demande d'informations et une zone de pertinence ciblée depuis la première entité de réseau (1.3, 3.2), dans lequel ladite demande d'informations est envoyée à la première entité de réseau (1.3, 3.2) par une seconde entité de réseau (1.2), dans lequel ladite demande d'informations comprend une condition définissant le moment où le client (3.7) répond à la demande d'informations, et dans lequel la zone de pertinence ciblée est une zone où la demande d'informations depuis la seconde entité de réseau (1.2) est ciblée ; et
- transmettre (7.4, 3.18*) les informations demandées lorsque la condition est satisfaite ou ignorer la demande d'informations si la condition n'est pas satisfaite ;
- au moins une unité de traitement (8.22, 10.12) configurée pour :
- déterminer si la condition est satisfaite et le client (3.7) est dans la zone de pertinence ciblée ; et
- fournir (7.3) les informations demandées.

14. Client (3.7) selon la revendication 13, configuré en outre pour réaliser le procédé de l'une quelconque des revendications 7 à 10.

15. Programme d'ordinateur comprenant un code de programme à exécuter par au moins une unité de traitement (8.22, 9.22, 10.12), dans lequel l'exécution du code de programme amène l'au moins une unité de traitement (8.22, 9.22, 10.12) à exécuter un procédé selon l'une quelconque des revendications 1 à 10.
